# FASCICULE DE BREVET EUROPEEN

(11) **EP 4 029 300 B1**
(45) Date de publication et mention de la délivrance du brevet: **05.03.2025**
(21) Numéro de dépôt: 20760499.2
(22) Date de dépôt: 05.08.2020
(51) Int. Cl.: H04W 12/122, H04W 12/33, H04W 12/55, H04W 84/18, H04W 88/18

(54) **PROCÉDÉ DE COMMUNICATION SANS-FIL ENTRE UN OBJET CLIENT ET UN OBJET SERVEUR**
VERFAHREN ZUR DRAHTLOSEN KOMMUNIKATION ZWISCHEN EINEM CLIENT-OBJEKT UND EINEM SERVER-OBJEKT
WIRELESS COMMUNICATION METHOD BETWEEN A CLIENT OBJECT AND A SERVER OBJECT

(30) Priorité: 11.09.2019 FR 1910005
(43) Date de publication de la demande: 20.07.2022
(73) Titulaire: Orange, 92130 Issy-les-Moulineaux (FR)
(72) Inventeur: BOUVET, Eric, 92326 CHATILLON (FR); DESHAIES, Thibault, 92326 CHATILLON (FR); FONTAINE, Fabrice, 92326 CHATILLON (FR)
(74) Mandataire: Regimbeau
(86) Numéro de dépôt international: PCT/FR2020/051436
(87) Numéro de publication internationale: WO 2021/048478

(56) Documents cités:
- EP-A1- 3 128 790
- EP-A1- 3 128 790
- EP-A1- 3 503 666
- EP-A1- 3 503 666
- CN-A- 105 516 975
- CN-A- 105 516 975
- US-A1- 2016 191 642
- US-A1- 2016 191 642
- US-A1- 2018 063 165
- US-A1- 2018 063 165
- US-A1- 2018 132 102
- US-A1- 2018 132 102
- RADHIKA GOEL, ANJALI SARDANA, RAMESH CHANDRA JOSHI: "Wireless Honeypot: Framework, Architectures and Tools", INTERNATIONAL JOURNAL OF NETWORK SECURITY, vol. 15, no. 5, September 2013 (2013-09-01), pages 373 - 383, XP002799161, Retrieved from the Internet <URL:https://www.semanticscholar.org/paper/Wireless-Honeypot%3A-Framework%2C-Architectures-and-Goel-Sardana/2c9694ccf951705147e6fd2467a00d4f50e7a214> [retrieved on 20200526]
- RADHIKA GOEL, ANJALI SARDANA, RAMESH CHANDRA JOSHI: "Wireless Honeypot: Framework, Architectures and Tools", INTERNATIONAL JOURNAL OF NETWORK SECURITY, vol. 15, no. 5, September 2013 (2013-09-01), pages 373 - 383, XP002799161, Retrieved from the Internet <URL:https://www.semanticscholar.org/paper/Wireless-Honeypot%3A-Framework%2C-Architectures-and-Goel-Sardana/2c9694ccf951705147e6fd2467a00d4f50e7a214> [retrieved on 20200526]

## Description

### DOMAINE TECHNIQUE GENERAL

La présente invention concerne un procédé de communication sans-fil, mis en œuvre par une passerelle agissant comme proxy entre un objet client et un objet serveur, ainsi qu'une passerelle correspondante, en particulier conformément au protocole Bluetooth Low Energy.

### ETAT DE L'ART

De plus en plus d'objets connectés possèdent une connectivité Bluetooth (BT) et en particulier la version 4 ou Low Energy (BLE).

Cette version de la norme Bluetooth prévoit l'émission « en l'air » par des périphériques BLE de paquets dits d'advertising (« annonce ») qui sont accessibles par tout le monde, en réponse auxquels un équipement passerelle envoie une requête de connexion au périphérique, de sorte à autoriser l'établissement de la connexion (par exemple avec saisie d'un mot de passe du périphérique sur la passerelle) un échange de données.

Le problème est que ce protocole est généralement peu surveillé que ce soit chez le particulier ou en milieu professionnel et peut donc offrir à des tiers malveillants des failles, bien qu'il existe en BLE des mécanismes d'authentification des équipements et de protection des données :
- Des données sensibles peuvent être envoyées dans des messages non sécurisés et donc interceptables ;
- De nombreux périphériques sont pré-configurés avec des mots de passe par défaut ou triviaux (0000), voir sans mot de passe (appariage automatique), d'où le risque de connexion non sollicité avec la passerelle d'un tiers mal intentionné ;
- Plus grave, BLE peut constituer un vecteur d'infection discret, une porte d'entrée peu surveillée vers d'autres réseaux. Par exemple, des vulnérabilités découvertes récemment par exemple BleedingBit en 2019) permettent en réponse aux paquets d'advertising d'envoyer des requêtes « malicieuses » via lesquelles il est possible de prendre le contrôle du périphérique et d'injecter du code.

Bien qu'il existe en pratique des parades à toutes ces difficultés, on constate que les constructeurs utilisent parfois partiellement ou pas du tout l'état de l'art de la sécurité sur ce protocole. De plus les mises à jour de sécurité des objets connectés (corrigeant les vulnérabilités) ne sont parfois pas possibles ou pas maintenues par le constructeur.

Il est connu par exemple du document EP 3 128 790 A1, la découverte d'entités Bluetooth^{™} Low Energy (BLE) à travers des événements publicitaires diffusés.

Au début de chaque événement publicitaire, l'entité annonceur envoie un paquet publicitaire correspondant au type d'événement publicitaire. Selon le type de paquet publicitaire, une entité scanner peut adresser une requête à l'annonceur sur le même canal PHY publicitaire, qui peut être suivie d'une réponse de l'annonceur sur le même canal PHY publicitaire. Le canal PHY publicitaire change lors du prochain paquet publicitaire envoyé par l'annonceur lors du même événement publicitaire. Les dispositifs initiateurs qui tentent d'établir une connexion avec un autre dispositif écoutent les paquets publicitaires connectables. Si l'annonceur utilise un événement publicitaire connectable, un initiateur peut effectuer une demande de connexion en utilisant le même canal publicitaire PHY sur lequel il a reçu le paquet publicitaire connectable. L'événement publicitaire prend fin et les événements de connexion commencent si l'annonceur reçoit et accepte la demande de connexion. Une fois la connexion établie, l'initiateur devient le périphérique maître dans un piconet et le périphérique publicitaire devient le périphérique esclave. Les événements de connexion sont utilisés pour envoyer des paquets de données entre les appareils maître et esclave.

Le document "Wireless Honeypot: Framework, Architectures and Tools" publié par le "International Journal of Network Security" par Radhika Goel; Anjali Sardana; Ramesh Chandra Joshi, Vol 15, NR 5, décrit différents scénarios d'attaque possibles dans un environnement sans fil.

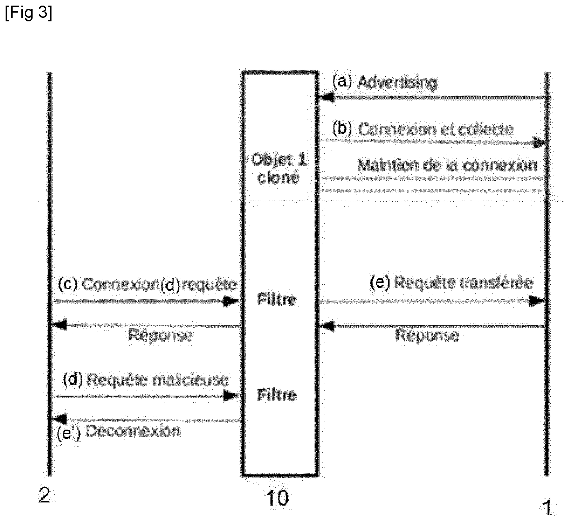

Les attaquants modifient les configurations de point d'accès, AP, par défaut/ spécifiques à la sécurité en accédant à l'interface de gestion du serveur administratif de l'AP à l'aide de mots de passe par défaut bien connus, ou via d'autres services ouverts (tels que des attaques via SNMP, DNS, DHCP, TFTP, etc.) à ces serveurs. Pour attirer ces attaquants, des points d'accès émulés/réels et des serveurs d'administration sont déployés (comme le montre la figure 3). Les outils Honeyd sont utilisés pour émuler les points d'accès sans fil et les services de serveur d'administration auxquels les attaquants peuvent se connecter. Il crée de fausses piles TCP/IP pour tromper les outils de prise d'empreintes digitales à distance tels que Nmap ou Xprobe. De faux serveurs Web, de faux sites Web et d'autres faux services sont également créés par Honeyd pour piéger l'attaquant et cacher le véritable serveur administratif contrôlant le WAP.

Il serait ainsi souhaitable de disposer d'une solution universelle permettant d'augmenter la sécurité et de protéger tous les objets connectés BLE vulnérables, quel que soit l'âge et les capacités de ces caractères.

### PRESENTATION DE L'INVENTION

La présente invention se rapporte ainsi selon un premier aspect à un procédé de communication sans-fil entre un objet client et un objet serveur, procédé tel que défini par la revendication 1.

La passerelle ainsi interposée entre un objet serveur présentant éventuellement des vulnérabilités et tout objet client sert ainsi astucieusement de proxy permettant de préserver l'objet serveur de toute tentative d'exploitation de vulnérabilité sans limiter ses fonctionnalités.

Selon d'autres caractéristiques avantageuses et non-limitatives :
Le procédé comprend une étape (d) de réception depuis l'objet client d'une requête de données destinée à l'objet serveur. En effet comme, la passerelle se présente comme l'objet serveur, de sorte que l'objet client ne fait pas la différence et lui envoie des requêtes en pensant les envoyer à l'objet serveur.

Le procédé comprend une étape (e) de retransmission de ladite requête à l'objet serveur, la réception depuis l'objet serveur d'une réponse à ladite requête destinée à l'objet client, et la retransmission de ladite réponse à l'objet client. Cela permet un fonctionnement normal de l'objet serveur, la passerelle faisant passer les requêtes et leurs réponses de manière transparente.

L'étape (d) comprend la vérification que ladite requête n'est pas malicieuse, l'étape (e) n'étant mise en œuvre que si la requête n'est pas malicieuse, le procédé comprenant sinon une étape (e') d'interruption de la deuxième connexion. Le présent procédé permet ainsi de faire le tri très efficacement entre les objets client bien intentionnés et ceux cherchant à abuser d'éventuelles vulnérabilité de l'objet serveur.

L'étape (e') comprend l'inscription de l'objet client dans une liste noire. Les objets clients frauduleux peuvent ainsi être mis au ban.

Ladite communication sans-fil est conforme au protocole Bluetooth Low Energy, BLE, de sorte que les lesdites première connexion et deuxième connexion sont des connexions BLE. Il s'agit en effet d'un protocole particulièrement adapté au présent procédé.

L'étape (b) comprend la recherche d'éventuelles vulnérabilités au niveau dudit objet serveur. Cela permet, avant toute tentative de connexion d'un objet client, d'évaluer les risques et d'anticiper les menaces auxquelles l'objet serveur peut être confronté. Ainsi, la passerelle permet de rechercher des objets clients exactement comme le ferait l'objet serveur, de sorte à complètement leurrer les objets client.

Lesdits paquets d'annonce diffusés par la passerelle à l'étape (c) sont modifiés de sorte à être représentatifs soit d'une absence de vulnérabilités, soit de vulnérabilités supplémentaires. Ainsi, la passerelle peut présenter aussi bien décourager les connexions frauduleuses que les attirer (mode honeypot).

Selon un deuxième aspect est proposée une passerelle pour la communication sans-fil entre un objet client et un objet serveur, la passerelle étant telle que définie par la revendication 9.

Selon des troisième et quatrième aspects, sont proposés un produit programme d'ordinateur comprenant des instructions de code pour l'exécution d'un procédé selon le premier aspect, de communication sans-fil entre un objet client et un objet serveur ; ainsi qu'un moyen de stockage lisible par un équipement informatique sur lequel un produit programme d'ordinateur comprend des instructions de code pour l'exécution d'un procédé selon le premier aspect, de communication sans-fil entre un objet client et un objet serveur, comme définis par les revendications 10 et 11.

### PRESENTATION DES FIGURES

D'autres caractéristiques et avantages de la présente invention apparaîtront à la lecture de la description qui va suivre d'un mode de réalisation préférentiel. Cette description sera donnée en référence aux figures en annexe dont :
[Fig. 1]La figure 1 représente schématiquement une communication directe BLE entre un objet serveur et un objet client conforme à l'art antérieur ;
[Fig. 2]la figure 2 représente une communication indirecte BLE entre un objet serveur et un objet client conforme au procédé selon l'invention ;
[Fig. 3]La figure 3 représente schématiquement les étapes d'un mode de réalisation préféré du procédé selon l'invention.

### DESCRIPTION DETAILLEE

### Objets connectés

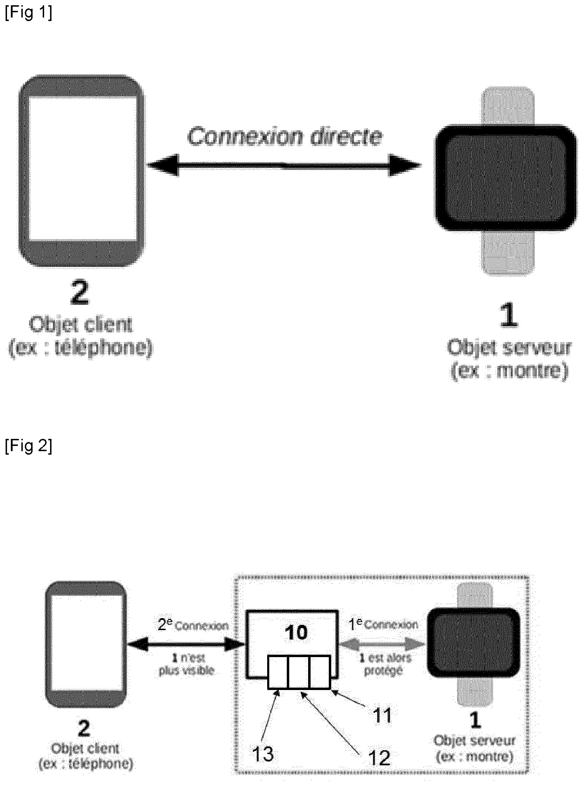

Le procédé selon l'invention est un procédé de communication entre deux objets connectés 1, 2 classiquement connectables de la manière illustrée par la **figure 1** (qui représente l'art antérieur). Comme expliqué, cette communication s'effectue sans-fil, par émission d'ondes radio. Ladite communication utilise préférentiellement le protocole Bluetooth, préférentiellement Low Energy (BLE). Alternativement ce pourra être conformément au protocole DECT ULE (l'extension « Ultra Low Energy » de la norme DECT, « Digital Enhanced Cordless Telecommunications ») ZWave, etc., et de façon générale tout protocole sans fil de courte portée par ondes radio connu de l'homme du métier, mais dans la suite de la présente description on prendra l'exemple préféré de BLE. L'homme du métier saura transposer l'invention en conséquence.

On suppose ainsi que lesdits objets connectés 1, 2 sont compatibles BLE. Le premier objet connecté 1 est dit objet serveur, ou « *Bluetooth Smart* Ready », et le deuxième objet connecté est dit objet client ou « *Bluetooth Smart* »*.* Ces termes serveur/client s'entendent typiquement au sens de la couche GATT (« Generic Attribute Profile ») du protocole BLE qui définit comment les données sont organisées et échangées. En effet, on suppose arbitrairement que la finalité de ladite communication est d'échanger des données de l'équipement serveur 1 vers l'équipement client 2.

Le plus souvent, l'objet serveur 1 a un rôle d'« esclave » et l'objet client 2 a un rôle de « maître » tels que définis traditionnellement dans le protocole Bluetooth depuis l'origine (on trouve également la terminologie équipement « central » pour désigner le maître et équipement « périphérique » pour désigner l'esclave), le maître étant l'équipement responsable de la synchronisation des équipements, l'esclave subissant.

En effet, il est classique que l'on souhaite faire remonter des données du maître vers l'esclave, i.e. l'esclave fournit les données, d'où sa fonction de serveur.

De manière préférée, l'objet client 2 (maître) est ainsi un équipement principal autonome tel qu'un terminal mobile de type smartphone, une tablette tactile, un ordinateur, etc., et l'objet serveur 1 (esclave) est un équipement secondaire fournissant des données tel qu'une montre connectée, une télécommande, un clavier, une souris, une webcam, une balise, des capteurs divers (domotiques, météo, corporels, etc.). En général, un objet serveur 1 est pré-configuré, peu ou pas mettable à jour, et présente donc des vulnérabilités non résolues.

Dans la suite de la présente description, on prendra l'exemple illustratif dans lequel l'objet serveur 1 est une montre connectée et l'objet client 2 un terminal mobile smartphone.

On notera qu'il peut y avoir plusieurs objets serveur et/ou client 1, 2, en particulier plusieurs « paires » d'une objet client 2 et d'un objet serveur 1.

### Passerelle

En référence à la **figure 2****,** le présent procédé implique un troisième objet connecté 10, dit passerelle, via lesquels les objets connectés 1 et 2 seront connectés comme il va être présenté. Par passerelle, ou proxy (en français on peut trouver le terme « mandataire »), on entend un objet apte à jouer un rôle d'intermédiaire entre les objets connectés 1 et 2. Plus précisément, alors que les objets client et serveur 1, 2 devraient normalement se connecter directement de la manière classique représentée à la figure 1, le présent procédé propose d'interposer la passerelle 10 entre ces objets connectés 1, 2.

La passerelle 10 peut être n'importe quel équipement ayant au moins les fonctionnalités d'objet client, et avantageusement un équipement exempt de vulnérabilité, et pour cela en capacité d'intégrer les derniers « patchs de sécurité » par un procédé de mise à jour (typiquement un équipement opérateur connecté au réseau internet). A ce titre la passerelle 10 comprend un module de traitement de données 11 de type processeur, le cas échéant une mémoire 12, une interface homme machine 13, etc.

La passerelle 10 est ainsi par exemple un autre terminal mobile, un boitier de connexion à internet, un routeur, etc. On note que les équipements de ce type font généralement l'objet de mises à jour du firmware permanentes (le cas échéant téléchargées et installées automatiquement), de sorte qu'ils sont généralement bien mieux protégés contre les vulnérabilités que les objets serveurs 1.

Dans tous les cas, on comprendra que le présent procédé n'est pas limité à certains objets connectés 1, 2, 10 et il suffit que ceux-ci disposent d'une connectivité sans-fil.

On notera juste qu'il peut également y avoir plusieurs passerelles 10 communiquant entre elles (par exemple un réseau local ethernet).

### Procédé

Le présent procédé est mis en œuvre par la passerelle 10 (ou plutôt son module de traitement de données 11). Ainsi toutes les étapes qui vont être décrites à présent seront présentées du point de vue de la passerelle 10.

En référence à la **figure 3****,** dans une première étape (a), la passerelle 10 détecte des paquets d'annonce diffusés par ledit objet serveur 1.

Par paquets d'annonce, on entend des paquets « d'advertising » envoyés à l'air et accessible à tout le monde (ces paquets sont « broadcastés », en français diffusés de manière large et non dirigée vers un destinataire particulier) conformément à ce qui est prévu notamment par le protocole BLE. Plus précisément, ces paquets envoyés périodiquement rendent l'objet serveur 1 détectable, signifient qu'il est « appariable » et n'importe quel objet « observateur » muni d'un adapteur BLE est capable de les recevoir et les lire. Le fait pour un objet client d'écouter s'il y a des paquets d'advertising diffusés est appelé « discovery ».

Les paquets d'advertising contiennent des données génériques de présentation de l'équipement serveur 1 les ayant diffusés, telles que des « drapeaux » signifiant les capacités de l'objet serveur 1, des listes de services adoptés, etc. Le payload d'un paquet d'advertising peut avoir une taille jusqu'à 31 octets.

Alors, dans une seconde étape (b), la passerelle 10 établit une connexion, dite première connexion, entre la passerelle 10 et ledit objet serveur 1.

Plus précisément, conformément notamment au protocole BLE, cette étape comprend typiquement, en réponse à la réception d'un paquet d'advertising, l'émission par la passerelle 10 d'une requête de connexion à destination de l'objet serveur 1 (il s'agit bien d'un envoi dirigé et plus de broadcast). Suite à la réception de cette requête de connexion, l'objet serveur 1 se considère apparié avec la passerelle 10, et arrête de diffuer des paquets d'annonce.

On comprend ainsi que tant que cette première connexion est active, cela a pour effet de bloquer la diffusion par ledit objet serveur 1 de paquets d'annonce, de sorte que l'objet serveur 1 ne se déclare pas ce qui le rend « masqué » (il n'est plus visible par exemple de l'objet client 2 même en discovery). En outre la passerelle 10 récupère des informations d'identification dudit objet serveur 1 à présent que la connexion est établie, ces informations d'identification étant par exemple un initiant unique UUID de l'objet serveur 1. En pratique, ces informations peuvent être requises en même temps que la connexion.

Ladite première connexion est préférentiellement maintenue aussi longtemps que possible, de sorte à protéger l'objet serveur 1 dont on répète qu'il est potentiellement vulnérable.

De manière à en avoir le cœur net, la passerelle 10 peut lors de l'étape (b) rechercher d'éventuelles vulnérabilités au niveau dudit objet serveur 1. Par vulnérabilité, on entend n'importe quelle faiblesse du protocole de communication sans-fil tel que mis en œuvre par l'objet serveur (i.e. dans la version telle qu'implémentée par l'objet serveur) permettant à un attaquant de porter atteinte à l'intégrité de son fonctionnement, en particulier une vulnérabilité BLE.

Cette recherche peut être faite de différentes façons, et par exemple la passerelle pourra :
- utiliser des scripts d'attaque pour détecter des vulnérabilités connues dites CVEs (« Common Vulnerabilities and Exposures », par exemple Blueborne, Bleeding Bit, etc., pour BLE) ;
- détecter l'utilisation de modes de connexion non sécurisée (appairage Just Works sans mot de passe, appairage avec des mots de passe par défauts ou triviaux, détection d'absence de mécanisme d'anti-brute force, vérification de l'absence de paquets d'advertising une fois qu'une connexion est établie, etc.) ; et/ou
- Vérifier l'absence de données sensibles dans des messages non sécurisées comme les paquets d'advertising ou des connexions GATT elles-mêmes non sécurisées (par exemple une passerelle 10 est capable de voir si l'objet serveur 1 rend accessible sa clé WiFi puisqu'elle la connait, idem pour d'autres données sensibles telles qu'un identifiant mot de passe, une position, etc.)

On répète que, que l'objet serveur 1 présente ou non des vulnérabilités et que ces vulnérabilités soient connues ou non, l'existence de la première connexion protège l'objet serveur 1 en exposant à sa place la passerelle 10 qui peut elle-même être exempte de vulnérabilité si son firmware est à jour.

Dans une étape (c), la passerelle 10 établit une autre connexion, dite deuxième connexion, entre la passerelle 10 et ledit objet client 2. A noter que s'il y a plusieurs passerelles 10, celles-ci (ou du moins celles ayant reçu les paquets d'advertising de l'objet serveur 1) peuvent se mettre d'accord pour décider laquelle se connecte ici, ce choix pouvant être dynamique (si l'objet serveur 1 bouge). On supposera dans la suite de la description que la passerelle 10 impliquée dans l'étape (c) est déterminée.

La particularité est que la passerelle 10 utilise en tant qu'informations d'identification lesdites informations d'identification dudit objet serveur 1 récupérées, de sorte à simuler auprès de l'objet client 2 une connexion avec l'objet serveur 1.

En d'autres termes, la passerelle duplique (ou « clone ») l'identification objet de l'objet serveur 1, et ainsi l'objet client 2 se connecte à la passerelle 10 en pensant se connecter à l'objet serveur 1. On comprend que l'objet serveur 1 et l'objet client 2 restent connectés, mais indirectement via la passerelle 10 agissant comme proxy.

Cette deuxième connexion est à nouveau mise en œuvre conformément à la norme, et peut suivre classiquement la diffusion de paquets d'advertising.

Plus précisément, l'étape (c) comprend la diffusion préalable par la passerelle de paquets d'annonce dudit objet serveur 1. En effet, on répète que du fait du maintient de la première connexion l'objet serveur 1 est inaccessible, et c'est la passerelle 10 qui broadcaste les paquets d'advertising en se faisant passer pour l'objet serveur 1. A noter que la diffusion des paquets d'advertising peut être « améliorée » par la passerelle 10. Par exemple, BLE prévoit 3 canaux d'advertising, et si seulement un canal était utilisé par l'objet serveur 1, la passerelle 10 corrigerait cela. En outre la puissance et/ou la fréquence d'émission des paquets d'advertising peuvent être augmentées. En fin le contenu même des paquets d'advertising peut être modifié notamment de sorte à ne pas être représentatif de vulnérabilité (en particulier les éventuelles vulnérabilités détectées à l'étape (b)).

Dans tous les cas, si une vulnérabilité (de l'objet serveur 1) a été détectée à l'étape (b), il est possible de conditionner l'établissement de la deuxième connexion (i.e. la mise en œuvre de l'étape (c)) à l'accord de l'utilisateur. Plus précisément l'interface homme machine 13 peut être utilisée pour notifier l'utilisateur que l'objet serveur 1 est vulnérable et que l'objet client 2 tente de s'y connecter. Bien que comme l'on verra le présent procédé permette même dans ces conditions un fonctionnement parfaitement sécurisé, la décision finale d'accepter ou non la connexion peut ainsi revenir à l'utilisateur.

### Echange sécurisé de données

Une fois les deux connexions établies, du point de vue de l'objet client 2 il est dans une connexion sans-fil ordinaire avec l'objet serveur 1, de sorte que le procédé peut comprendre une étape (d) de réception (toujours par la passerelle 10) depuis l'objet client 2 d'une requête de données (par exemple GATT) destinée à l'objet serveur 1 (l'objet client 2 envoie cette requête à la passerelle 10 en pensant l'envoyer à l'objet serveur 1). Par exemple, l'objet client 2 peut demander les valeurs de grandeurs mesurées par des capteurs de l'objet serveur 1. A noter que cette requête peut accompagner la requête de connexion, de sorte que les étapes (c) et (d) sont concomitantes.

Alors le procédé peut comprendre une étape (e) de retransmission de ladite requête à l'objet serveur 1 (qui la traite), de réception depuis l'objet serveur 1 d'une réponse à ladite requête destinée à l'objet client 2 (contenant les données demandées), et de retransmission de ladite réponse à l'objet client 2. A nouveau l'objet client 2 pense que c'est l'objet serveur 1 qui lui a répondu directement. S'il y a plusieurs objets serveur et/ou client 1, 2 connectés via la passerelle 10, celle-ci assure ainsi le routage correct des requêtes et de leurs réponses, de sorte que chaque objet 1, 2 présente un fonctionnement normal et n'est même pas conscient de l'interposition de la passerelle 10. Une nouvelle requête peut alors être reçue dans une nouvelle occurrence de l'étape (d), etc.

L'intérêt de la présence de la passerelle 10 est qu'il est possible de filtrer les requêtes de données. Plus précisément, l'étape (d) peut comprendre la vérification que ladite requête n'est pas malicieuse (i.e. ne tente pas d'exploiter pas une vulnérabilité quelconque, on parle également de requête « dangereuse »), l'étape (e) n'étant alors mise en œuvre que si la requête n'est pas malicieuse, le procédé comprenant sinon (alternativement) une étape (e') d'interruption de la deuxième connexion, par sécurité.

En résumé, la passerelle 10 à jour n'est plus sensible aux vulnérabilités, de sorte que si elle reçoit une requête malicieuse d'une part elle ne sera pas affectée, et d'autre part elle saura détecter le danger que constitue l'objet client 2, que la tentative d'exploitation d'une vulnérabilité soit délibérée (utilisateur malintentionné de l'objet client 2) ou résulte d'une infection (une vulnérabilité est déjà exploitée sur l'objet client 2).

A noter que l'étape (e') d'interruption de la deuxième connexion peut comprendre en outre l'inscription de l'objet client 2 dans une liste noire, par exemple gérée localement par la passerelle 10, voire globalement en ligne (ce peut être une liste partagée entre de nombreuses passerelles).

### Autres fonctionnalités

La présence de la passerelle 10 a d'autres avantages. Tout d'abord elle peut servir à « déverrouiller » l'objet serveur 1, en particulier pour une période déterminée, le cas échéant sous contrôle de l'utilisateur.

Par ailleurs, certains objets serveur 1 très simples ont des périodes répétées de veille, et la passerelle 10 peut être utilisée dans ces moments de veille pour renvoyer des données des communications précédentes (en cache), on parle de mode « shadow ». Plus précisément, la passerelle 10 va traiter directement une requête reçue alors que l'objet serveur 1 est en veille. Alors, l'étape (e) verra directement la génération par la passerelle 10 d'une réponse à la requête de données reçue à l'étape (d) (au lieu de la transmettre à l'objet serveur 1), puis la transmission simple de ladite réponse à l'objet client 2. Par exemple, si l'objet serveur 1 est un thermomètre qui toutes les minutes s'active pendant une seconde pour donner la température, durant les 59 secondes de veille la passerelle 10 répondra à une requête de température avec la dernière température connue.

Selon une autre variante qui peut être en complément ou alternativement aux les variantes précédemment décrites, la passerelle 10 peut rendre l'objet serveur 1 accessible via internet en simulant une autre deuxième connexion. On parle de MESH-over-IP.

Par ailleurs, selon une variante dite « honeypot », l'étape (c) peut comprendre à nouveau la modification des paquets d'annonce, cette fois si non pas pour ne pas être représentatif de vulnérabilités, mais au contraire être représentatif de vulnérabilités supplémentaires.

Cela peut sembler paradoxal, mais ce positionnement volontaire de vulnérabilités vise à « attirer » sciemment les tiers malintentionnés pour les neutraliser. Il est en effet facile de les repérer puis de les blacklister à l'étape (e') dès lors qu'ils essaient d'envoyer une requête malveillante.

### Passerelle

Selon un deuxième aspect, l'invention concerne une passerelle 10 pour la mise en œuvre du procédé selon le premier aspect.

La passerelle est apte à servir de proxy entre les objets 1, 2 et comprend comme expliqué un module de traitement de données 11 configuré pour :
- Détecter des paquets d'annonce diffusés par ledit objet serveur 1 ;
- Etablir une première connexion entre la passerelle 10 et ledit objet serveur 1 de sorte à bloquer la diffusion par ledit objet serveur 1 de paquets d'annonce, et récupération d'informations d'identification dudit objet serveur 1 ;
- Etablir une deuxième connexion, entre la passerelle 10 et ledit objet client 2, en utilisant en tant qu'informations d'identification de la passerelle 10 lesdites informations d'identification dudit objet serveur 1 récupérées, de sorte à simuler auprès de l'objet client 2 une connexion avec l'objet serveur 1

Peut également être implémenté comme expliqué la diffusion préalable par la passerelle 10 de paquets d'annonce dudit objet serveur 1, ainsi que, suite à la réception depuis l'objet client 2 d'une requête de données destinée à l'objet serveur 1, la retransmission de ladite requête à l'objet serveur 1, la réception depuis l'objet serveur 1 d'une réponse à ladite requête destinée à l'objet client (2), et la retransmission de ladite réponse à l'objet client 2, ou si la requête est déterminée comme malicieuse, l'interruption de la deuxième connexion et éventuellement l'inscription de l'objet client 2 dans une liste noire.

### Produit programme d'ordinateur

Selon un troisième et un quatrième aspects, l'invention concerne un produit programme d'ordinateur comprenant des instructions de code pour l'exécution (sur un module de traitement de donnés 11, en particulier celui de la passerelle 1) d'un procédé selon le premier aspect de l'invention de communication sans-fil entre un objet client 2 et un objet serveur 1, ainsi que des moyens de stockage lisibles par un équipement informatique (par exemple la mémoire 12 de la passerelle 10) sur lequel on trouve ce produit programme d'ordinateur.

## Revendications

1. Procédé de communication sans-fil de courte portée par ondes radio entre un objet client (2) et un objet serveur (1), le procédé comprenant la mise en œuvre par une passerelle (10) agissant comme proxy entre ledit objet client et ledit objet serveur, d'étapes de :
(a) Détection de paquets d'annonce diffusés par ledit objet serveur (1) ;
(b) Etablissement d'une première connexion entre la passerelle (10) et ledit objet serveur (1) de sorte à bloquer la diffusion par ledit objet serveur (1) de paquets d'annonce, et récupération d'informations d'identification dudit objet serveur (1) ;
(c) Etablissement d'une deuxième connexion entre la passerelle (10) et ledit objet client (2), en utilisant en tant qu'informations d'identification de la passerelle (10) lesdites informations d'identification dudit objet serveur (1) récupérées, de sorte à simuler auprès de l'objet client (2) une connexion avec l'objet serveur (1),
dans lequel l'étape (c) comprend la diffusion préalable de paquets d'annonce dudit objet serveur (1) par la passerelle (10).

2. Procédé selon la revendication 1, comprenant une étape (d) de réception depuis l'objet client (2) d'une requête de données destinée à l'objet serveur (1).

3. Procédé selon la revendication 2, comprenant une étape (e) de retransmission de ladite requête à l'objet serveur (1), la réception depuis l'objet serveur (1) d'une réponse à ladite requête destinée à l'objet client (2), et la retransmission de ladite réponse à l'objet client (2).

4. Procédé selon la revendication 3, dans lequel l'étape (d) comprend la vérification que ladite requête n'est pas malicieuse, l'étape (e) n'étant mise en œuvre que si la requête n'est pas malicieuse, le procédé comprenant sinon une étape (e') d'interruption de la deuxième connexion.

5. Procédé selon la revendication 4, dans lequel l'étape (e') comprend l'inscription de l'objet client (2) dans une liste noire.

6. Procédé selon l'une des revendications 1 à 5, dans lequel ladite communication sans-fil est conforme au protocole Bluetooth Low Energy, BLE, de sorte que les lesdites première connexion et deuxième connexion sont des connexions BLE.

7. Procédé selon l'une des revendications 1 à 6, dans lequel l'étape (b) comprend la recherche d'éventuelles vulnérabilités au niveau dudit objet serveur (1).

8. Procédé selon l'une des revendications 1 à 7, dans lequel lesdits paquets d'annonce diffusés par ladite passerelle (10) à l'étape (c) sont modifiés de sorte à être représentatifs soit d'une absence de vulnérabilités, soit de vulnérabilités supplémentaires.

9. Passerelle (10) pour la communication sans-fil de courte portée par ondes radio entre un objet client (2) et un objet serveur (1) et adaptée pour agir comme proxy entre ledit objet client et ledit objet serveur, la passerelle comprenant un module de traitement de données (11) configuré pour :
- Détecter des paquets d'annonce diffusés par ledit objet serveur (1) ;
- Etablir une première connexion entre la passerelle (10) et ledit objet serveur (1) de sorte à bloquer la diffusion par ledit objet serveur (1) de paquets d'annonce, et récupération d'informations d'identification dudit objet serveur (1) ;
- Etablir une deuxième connexion entre la passerelle (10) et ledit objet client (2), en utilisant en tant qu'informations d'identification de la passerelle (10) lesdites informations d'identification dudit objet serveur (1) récupérées, de sorte à simuler auprès de l'objet client (2) une connexion avec l'objet serveur (1).
dans lequel établir une deuxième connexion comprend la diffusion préalable de paquets d'annonce dudit objet serveur (1) par la passerelle (10).

10. Produit programme d'ordinateur comprenant des instructions de code pour l'exécution d'un procédé selon l'une des revendications 1 à 8 de communication sans-fil entre un objet client (2) et un objet serveur (1), lorsque le programme est exécuté sur un ordinateur d'une passerelle (10) agissant comme proxy entre ledit objet client et ledit objet serveur.

11. Moyen de stockage lisible par un équipement informatique sur lequel un produit programme d'ordinateur comprend des instructions de code pour l'exécution d'un procédé selon l'une des revendications 1 à 8 de communication sans-fil de courte portée par ondes radio entre un objet client (2) et un objet serveur (1), lorsque le programme est exécuté sur un ordinateur d'une passerelle (10) agissant comme proxy entre ledit objet client et ledit objet serveur.

## Patentansprüche

1. Verfahren zur drahtlosen Kommunikation mit kurzer Reichweite über Funkwellen zwischen einem Client-Objekt (2) und einem Server-Objekt (1), wobei das Verfahren die Umsetzung, durch ein Gateway (10), das als Proxy zwischen dem Client-Objekt und dem Server-Objekt fungiert, von folgenden Schritten beinhaltet:
(a) Detektieren von Ankündigungspaketen, die durch das Server-Objekt (1) ausgesendet werden;
(b) Erstellen einer ersten Verbindung zwischen dem Gateway (10) und dem Server-Objekt (1), um die Aussendung, durch das Server-Objekt (1), von Ankündigungspaketen zu blockieren, und Abrufen von Identifikationsinformationen des Server-Objekts (1);
(c) Erstellen einer zweiten Verbindung zwischen dem Gateway (10) und dem Client-Objekt (2), wobei als Identifikationsinformationen des Gateways (10) die abgerufenen Identifikationsinformationen des Server-Objekts (1) verwendet werden, um gegenüber dem Client-Objekt (2) eine Verbindung mit dem Server-Objekt (1) zu simulieren,
wobei Schritt (c) die Vorabaussendung von Ankündigungspaketen des Server-Objekts (1) durch das Gateway (10) beinhaltet.

2. Verfahren nach Anspruch 1, beinhaltend einen Schritt (d) des Empfangens, von dem Client-Objekt (2), einer Datenanforderung, die für das Server-Objekt (1) bestimmt ist.

3. Verfahren nach Anspruch 2, beinhaltend einen Schritt (e) des Weiterleitens der Anforderung an das Server-Objekt (1), das Empfangen, von dem Server-Objekt (1), einer Antwort auf die Anforderung, die für das Client-Objekt (2) bestimmt ist, und das Weiterleiten der Antwort an das Client-Objekt (2).

4. Verfahren nach Anspruch 3, wobei Schritt (d) das Verifizieren beinhaltet, dass die Anforderung nicht bösartig ist, wobei Schritt (e) nur dann umgesetzt wird, wenn die Anforderung nicht bösartig ist, wobei das Verfahren andernfalls einen Schritt (e') des Trennens der zweiten Verbindung beinhaltet.

5. Verfahren nach Anspruch 4, wobei Schritt (e') das Eintragen des Client-Objekts (2) in eine Schwarze Liste beinhaltet.

6. Verfahren nach einem der Ansprüche 1 bis 5, wobei die drahtlose Kommunikation dem Bluetooth-Low-Energy-Protokoll, BLE-Protokoll, entspricht, sodass die erste Verbindung und die zweite Verbindung BLE-Verbindungen sind.

7. Verfahren nach einem der Ansprüche 1 bis 6, wobei Schritt (b) die Suche nach möglichen Schwachstellen an dem Server-Objekt (1) beinhaltet.

8. Verfahren nach einem der Ansprüche 1 bis 7, wobei die in Schritt (c) durch das Gateway (10) ausgesendeten Ankündigungspakete so modifiziert werden, dass sie entweder für das Nichtvorhandensein von Schwachstellen oder für zusätzliche Schwachstellen repräsentativ sind.

9. Gateway (10) zur drahtlosen Kommunikation mit kurzer Reichweite über Funkwellen zwischen einem Client-Objekt (2) und einem Server-Objekt (1), das dazu angepasst ist, als Proxy zwischen dem Client-Objekt und dem Server-Objekt zu fungieren, wobei das Gateway ein Datenverarbeitungsmodul (11) beinhaltet, das zu Folgendem konfiguriert ist:
- Detektieren von Ankündigungspaketen, die durch das Server-Objekt (1) ausgesendet werden;
- Erstellen einer ersten Verbindung zwischen dem Gateway (10) und dem Server-Objekt (1), um die Aussendung, durch das Server-Objekt (1), von Ankündigungspaketen zu blockieren, und Abrufen von Identifikationsinformationen des Server-Objekts (1);
- Erstellen einer zweiten Verbindung zwischen dem Gateway (10) und dem Client-Objekt (2), wobei als Identifikationsinformationen des Gateways (10) die abgerufenen Identifikationsinformationen des Server-Objekts (1) verwendet werden, um gegenüber dem Client-Objekt (2) eine Verbindung mit dem Server-Objekt (1) zu simulieren,
wobei das Erstellen einer zweiten Verbindung die Vorabaussendung von Ankündigungspaketen des Server-Objekts (1) durch das Gateway (10) beinhaltet.

10. Computerprogrammprodukt, das Codeanweisungen zur Ausführung eines Verfahrens nach einem der Ansprüche 1 bis 8 zur drahtlosen Kommunikation zwischen einem Client-Objekt (2) und einem Server-Objekt (1) beinhaltet, wenn das Programm auf einem Computer eines Gateways (10) ausgeführt wird, das als Proxy zwischen dem Client-Objekt und dem Server-Objekt fungiert.

11. Von einer Computerausrüstung lesbares Speichermittel, auf dem ein Computerprogrammprodukt Codeanweisungen zur Ausführung eines Verfahrens nach einem der Ansprüche 1 bis 8 zur drahtlosen Kommunikation mit kurzer Reichweite über Funkwellen zwischen einem Client-Objekt (2) und einem Server-Objekt (1) beinhaltet, wenn das Programm auf einem Computer eines Gateways (10) ausgeführt wird, das als Proxy zwischen dem Client-Objekt und dem Server-Objekt fungiert.

## Claims

1. Method of short-range wireless communication over radio waves between a client object (2) and a server object (1), the method comprising implementation by a gateway (10) acting as proxy between said client object and said server object, of steps of:
(a) detection of advertising packets broadcast by said server object (1);
(b) set-up of a first connection between the gateway (10) and said server object (1) so as to block broadcast by said server object (1) of advertising packets, and retrieval of identification information of said server object (1);
(c) set-up of a second connection between the gateway (10) and said client object (2), using as identification information of the gateway (10) said retrieved identification information of said server object (1), so as to simulate a connection with the server object (1) in the client object (2),
wherein step (c) comprises advertising packets of said server object (1) being broadcast beforehand by the gateway (10).

2. Method according to Claim 1, comprising a step (d) of receiving from the client object (2) a data request intended for the server object (1).

3. Method according to Claim 2, comprising a step (e) of retransmission of said request to the server object (1), reception from the server object (1) of a response to said request intended for the client object (2), and retransmission of said response to the client object (2).

4. Method according to Claim 3, wherein step (d) comprises verification that said request is not malicious, step (e) being implemented only if the request is not malicious, the method otherwise comprising a step (e') of interruption of the second connection.

5. Method according to Claim 4, wherein step (e') comprises blacklisting the client object (2).

6. Method according to any of Claims 1 to 5, wherein said wireless communication complies with the BLE protocol, BLE standing for Bluetooth Low Energy, such that said first connection and second connection are BLE connections.

7. Method according to any of Claims 1 to 6, wherein step (b) comprises a search for potential vulnerabilities in said server object (1).

8. Method according to any of Claims 1 to 7, wherein said advertising packets broadcast by said gateway (10) in step (c) are modified so as to be representative either of an absence of vulnerabilities, or of additional vulnerabilities.

9. Gateway (10) for short-range wireless communication over radio waves between a client object (2) and a server object (1) and configured to act as proxy between said client object and said server object, the gateway comprising a data-processing module (11) configured to:
- detect advertising packets broadcast by said server object (1);
- set up a first connection between the gateway (10) and said server object (1) so as to block broadcast by said server object (1) of advertising packets, and retrieve identification information of said server object (1) ;
- set up a second connection between the gateway (10) and said client object (2), using as identification information of the gateway (10) said retrieved identification information of said server object (1), so as to simulate a connection with the server object (1) in the client object (2),
wherein setting up a second connection comprises advertising packets of said server object (1) being broadcast beforehand by the gateway (10).

10. Computer program product comprising code instructions for executing a method according to any of Claims 1 to 8 of wireless communication between a client object (2) and a server object (1), when the program is executed on a computer of a gateway (10) acting as proxy between said client object and said server object.

11. Storage means readable by computing equipment on which a computer program product comprises code instructions for executing a method according to any of Claims 1 to 8 of short-range wireless communication over radio waves between a client object (2) and a server object (1), when the program is executed on a computer of a gateway (10) acting as proxy between said client object and said server object.
